# EUROPEAN PATENT APPLICATION

(11) **EP 2 058 965 A2**
(43) Date of publication of application: **13.05.2009**
(21) Application number: 08153582.5
(22) Date of filing: 28.03.2008
(51) Int. Cl.: H04H 60/65

(54) **Broadcast receiving apparatus and method capable of setting favourite programs**

(30) Priority: 12.09.2007 KR 20070092565
(71) Applicant: Samsung Electronics Co., Ltd., Suwon-si, Gyeonggi-do 442-742 (KR)
(72) Inventor: Lee, Chang-soo, Seoul (KR); Kim, Joon-hwan, Gyeonggi-do (KR); Lee, Hyeon-ji, Gyeonggi-do (KR)
(74) Representative: Brandon, Paul Laurence

(57) **Abstract**

A broadcast receiving apparatus (100) and method for setting favorite programs are provided. The broadcast receiving apparatus may list a broadcast program currently displayed on a screen in a favorite program table or may delete the broadcast program from the favorite program table using a predetermined key. Therefore, a broadcast program provided at a time slot which a user desires to view may be listed in or deleted from a favorite program table.

## Description

### BACKGROUND OF THE INVENTION

### 1. Field of the Invention

Apparatuses and methods consistent with the present invention relate to setting favorite programs.

### 2. Description of the Related Art

Broadcast receiving apparatuses, such as televisions (TVs) or set-top boxes, receive broadcast signals from broadcast stations, process the broadcast signals, and provide video and sound so that users may view broadcasts. Such broadcast receiving apparatuses are capable of receiving broadcast signals from broadcast stations via cables or satellites, and accordingly, users may view broadcast programs provided from broadcast stations by selecting channels which they desire to view.

A user selects a channel corresponding to a desired broadcast program by manipulating number keys or up and down arrow keys on a remote controller, in order to view the desired broadcast program. However, if there are many channels, a user may set a frequently viewed channel to be a favorite channel using a favorite channel function, and then may select the set favorite channel using a shortcut key on the remote controller, to view the desired broadcast program.

If the user attempts to view the desired broadcast program using the favorite channel function, as described above, the user needs to open a menu for setting favorite channels every time the user wishes to set favorite channels. Additionally, if channel numbers corresponding to favorite broadcast programs are renumbered, the user may have to reset the favorite channels, which increases inconvenience to the user.

Additionally, if a previous channel function is used to simply switch between two channels, it is impossible to switch between three or more channels.

As described above, when the favorite channel function is used, the processes of setting and deleting favorite channels are complex, and considerable time is required. Accordingly, the favorite channel function is inappropriate for setting broadcast programs which change freely according to the time and circumstances. Furthermore, when the previous channel function is used, the number of channels which may be selected is limited, so it is difficult to switch between a large numbers of channels.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a broadcast receiving apparatus having a favorite program function capable of setting a broadcast program displayed on a screen to be a favorite program, deleting the set favorite program using a specific key and automatically managing a favorite program table according to the time and circumstances of programs in order for a user to simply and freely set a desired broadcast program according to the time and circumstances, and a method of setting a favorite program in the broadcast receiving apparatus.

According to an aspect of the present invention, there is provided a broadcast receiving apparatus comprising a command receiver which receives a channel selection command; a broadcast signal receiver which receives a broadcast signal of a channel selected in response to the channel selection command; and a controller which lists a broadcast program corresponding to the broadcast signal received by the broadcast signal receiver in a favorite program table, if a list command is received by the command receiver when the broadcast program is provided.

The controller may delete the broadcast program listed in the favorite program table from the favorite program table if a delete command is received by the command receiver when the broadcast program is provided.

The list command and the delete command may be received by the command receiver using the same key.

The controller may delete the broadcast program of which the broadcast time has finished from the favorite program table, if the broadcast program of which the broadcast time has finished exists in the favorite program table.

The broadcast receiving apparatus may further comprise a user interface (UI) generator which generates one of a message and an icon to notify that the broadcast program has been listed in the favorite program table.

The controller may control the broadcast programs listed in the favorite program table to be sequentially provided in response to a favorite program selection command received by the command receiver.

The controller may control one broadcast program from among the broadcast programs listed in the favorite program table to be provided in response to the favorite program selection command received by the command receiver, and may provide the broadcast programs listed in the favorite program table sequentially using one of a channel up key and a channel down key on the command receiver.

The broadcast receiving apparatus may further comprise a memory unit which stores the favorite program table. The controller may update the broadcast time of the broadcast program listed in the favorite program table, based on additional data contained in the broadcast signal periodically received by the broadcast signal receiver.

The controller may delete the corresponding broadcast program from the favorite program table, according to the updated broadcast time.

According to another aspect of the present invention, there is provided a method for setting a favorite program in a broadcast receiving apparatus, the method comprising receiving a channel selection command; receiving a broadcast signal of a channel selected in response to the channel selection command; and listing a broadcast program corresponding to the received broadcast signal in a favorite program table, if a list command is received when the broadcast program is provided.

The method may further comprise deleting the broadcast program listed in the favorite program table from the favorite program table if a delete command is received when the broadcast program is provided.

The list command and the delete command may be received using the same key.

The method may further comprise deleting the broadcast program of which the broadcast time has finished from the favorite program table, if the broadcast program of which the broadcast time has finished exists in the favorite program table.

The method may further comprise generating one of a message and an icon to notify that the broadcast program has been listed in the favorite program table.

The method may further comprise controlling the broadcast programs listed in the favorite program table to be sequentially provided in response to a received favorite program selection command.

The method may further comprise controlling one broadcast program from among the broadcast programs listed in the favorite program table to be provided in response to the received favorite program selection command; and providing the broadcast programs listed in the favorite program table sequentially using one of a channel up key and a channel down key.

The method may further comprise storing the favorite program table; and updating the broadcast time of the broadcast program listed in the favorite program table, based on additional data contained in the periodically received broadcast signal.

The method may further comprise deleting the corresponding broadcast program from the favorite program table, according to the updated broadcast time.

### BRIEF DESCRIPTION OF THE DRAWINGS

The present invention will be more apparent by the following detailed description of exemplary embodiments of the present invention with reference to the accompanying drawings, in which:

FIG. 1 is a block diagram schematically showing a broadcast receiving apparatus according to an exemplary embodiment of the present invention;

FIG. 2 is a diagram explaining a method for setting a favorite program in a broadcast receiving apparatus according to an exemplary embodiment of the present invention;

FIG. 3 is a diagram explaining a method for viewing broadcast programs using a favorite program setting function of a broadcast receiving apparatus according to an exemplary embodiment of the present invention;

FIG. 4 is a flowchart explaining a method for setting a favorite program in a broadcast receiving apparatus according to an exemplary embodiment of the present invention; and

FIG. 5 is a flowchart explaining a method for deleting a favorite program in a broadcast receiving apparatus according to an exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

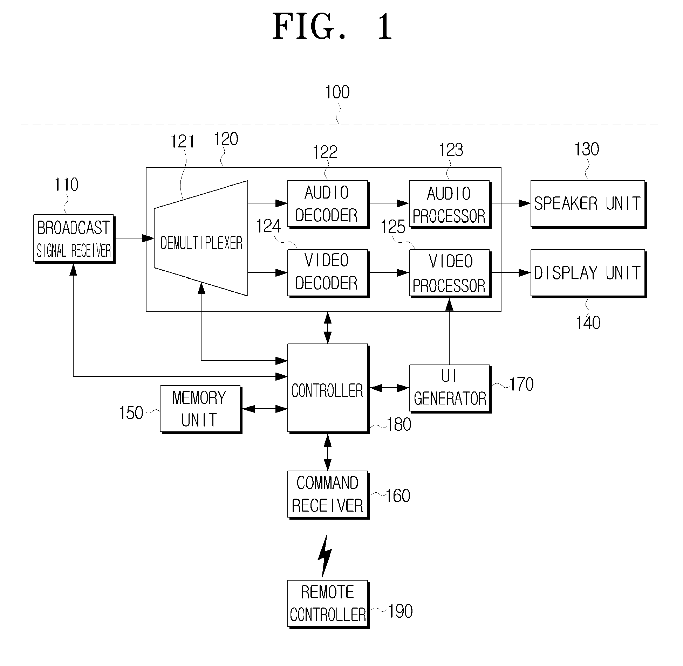

FIG. 1 is a block diagram schematically showing a broadcast receiving apparatus 100 according to an exemplary embodiment of the present invention.

The broadcast receiving apparatus 100 of FIG. 1 comprises a broadcast signal receiver 110, a signal processor 120, a speaker unit 130, a display unit 140, a memory unit 150, a command receiver 160, a user interface (UI) generator 170, and a controller 180.

The broadcast signal receiver 110 comprises a tuner (not shown) configured to tune broadcast signals transmitted from broadcast stations, and a demodulator (not shown) configured to demodulate the tuned broadcast signals and correct errors of the tuned broadcast signals so that the demodulated signals may be output in a transport stream format. The broadcast signal receiver 110 may tune broadcast signals having frequency bands corresponding to selected channels under control of the controller 180.

The signal processor 120 comprises a demultiplexer 121, an audio decoder 122, an audio processor 123, a video decoder 124, and a video processor 125.

The demultiplexer 121 separates the broadcast signal demodulated by the broadcast signal receiver 110 into video data, audio data, and program and system information protocol (PSIP), and outputs the separated video, audio and PSIP data in a bit stream format.

The audio decoder 122 decodes the audio data separated by the demultiplexer 121 and outputs the decoded audio data. The audio processor 123 performs signal processing of the audio data output from the audio decoder 122 according to the output level of the speaker unit 130.

The video decoder 124 decodes the video data separated by the demultiplexer 121 and outputs the decoded video data. The video processor 125 performs signal processing of the video data output from the video decoder 124 to match the vertical frequency, resolution, and screen ratio in accordance with the output standard of the display unit 140. The video processor 125 may include a scaler (not shown).

The speaker unit 130 and the display unit 140 may output sound and video, respectively, corresponding to the audio data and the video data output from the signal processor 120, so that a user may be provided with broadcast programs.

The memory unit 150 stores various programs required to perform operations of the broadcast receiving apparatus 100. Additionally, the memory unit 150 stores the setting state of the broadcast receiving apparatus 100 which is input by the user. Specifically, the memory unit 150 stores a favorite program table in which broadcast programs selected by the user are contained. The broadcast programs listed in the favorite program table may be deleted by the user, or may be automatically deleted according to a broadcast end time based on the PSIP data. Additionally, if a broadcast program is set to be broadcast in another time slot, the broadcast program may be updated to reflect the change and may then be listed on the favorite program table.

For example, the broadcast receiving apparatus 100 may periodically receive the PSIP data containing information regarding the length of the broadcast program from a broadcast station, so if the length of the broadcast program listed in the favorite program table is less than that of the broadcast program that has previously been received, the display time of the broadcast program may be based on the length of the received broadcast program. Additionally, if the length of the broadcast program in the favorite program table is greater than that of the broadcast program that has been received, the broadcast program may remain in the favorite program table, and the display time of the broadcast program may be based on the length of the received broadcast program.

The command receiver 160 comprises various keys (not shown) which a user may use to input commands, and an infrared receiver (not shown), which receives user commands transmitted from the remote controller 190. The command receiver 160 transfers key signals, corresponding to the user commands input using the various keys and infrared receiver, to the controller 180.

The user may input a list command to list a broadcast program currently being displayed on the display unit 140 in the favorite program table, using a predetermined key on the remote controller 190. If the broadcast program listed in the favorite program table is currently displayed on the display unit 140, the user may also input a delete command to delete the broadcast program currently being displayed on the display unit 140 from the favorite program table, using the predetermined key. The command receiver 160 may then transfer the list command or the delete command input by the user using the predetermined key to the controller 180.

The UI generator 170 generates a message or an icon to indicate the status of the broadcast receiving apparatus 100 under the control of the controller 180. In more detail, if the user lists the broadcast program currently being displayed on the display unit 140 in the favorite program table, the UI generator 170 may generate a message or an icon to notify that the broadcast program has been listed in the favorite program table. Additionally, if the broadcast program listed in the favorite program table is currently displayed on the display unit 140, and if the user deletes the broadcast program currently being displayed on the display unit 140 from the favorite program table, the UI generator 170 may generate a message or an icon to notify that the broadcast program has been deleted from the favorite program table.

If the broadcast program is automatically deleted from the favorite program table when it has been completely displayed, the UI generator 170 may also generate a message or an icon to inform that the broadcast program has been deleted from the favorite program table. The messages or icons generated by the UI generator 170 are processed by the video processor 125 and displayed on the display unit 140.

The controller 180 controls each unit of the broadcast receiving apparatus 100 to perform its operations, according to the user commands received by the command receiver 160. The controller 180 may be implemented as a microcomputer, a central processing unit (CPU), a program embodied on a computer-readable medium, or the like. Specifically, the controller 180 controls the broadcast signal receiver 110 to receive a broadcast signal for a channel selected according to a channel selection command received by the command receiver 160. Additionally, if the list command is received by the command receiver 160 when a broadcast program corresponding to the broadcast signal received by the broadcast signal receiver 110 is provided to the user through the speaker unit 130 and display unit 140, the controller 180 may list the broadcast program currently provided to the user in the favorite program table and store the favorite program table in the memory unit 150.

The controller 180 controls the broadcast signal receiver 110, signal processor 120, speaker unit 130 and display unit 140 so that the broadcast programs listed in the favorite program table may be provided sequentially to the user according to a favorite program selection command received by the command receiver 160. In this situation, if the delete command is received by the command receiver 160, the controller 180 may delete the broadcast program currently provided to the user from among the broadcast programs listed in the favorite program table from the favorite program table stored in the memory unit 150.

A digital broadcast signal received by the broadcast signal receiver 110 also comprises information regarding the broadcast time of the broadcast program, so the controller 180 may automatically delete a broadcast program of which the broadcast time has finished from the favorite program table, based on the information regarding the broadcast time. In addition, if the broadcast program is set to be broadcast in another time slot, the broadcast program may be updated to reflect the change and may then be listed on the favorite program table.

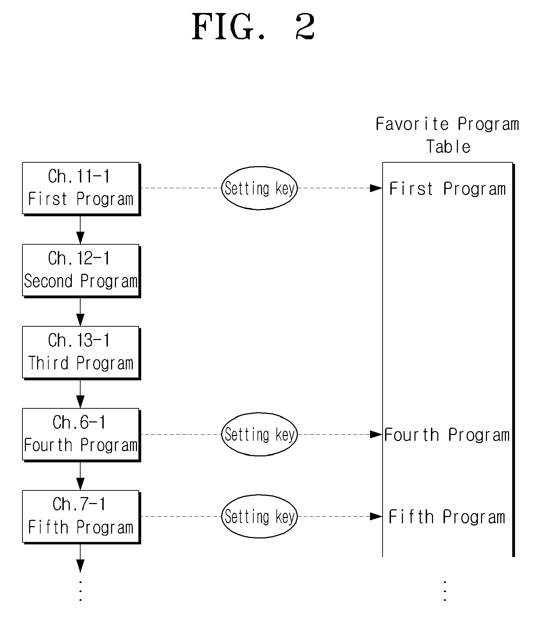

FIG. 2 is a diagram explaining a method for setting a favorite program in the broadcast receiving apparatus 100 according to an exemplary embodiment of the present invention.

As shown in FIG. 2, the broadcast receiving apparatus 100 provides a first program, a second program, a third program, a fourth program, a fifth program, or other programs corresponding to channels 11-1, 12-1, 13-1, 6-1, 7-1 or other channels, respectively, selected according to the channel selection command received by the command receiver 160. In this situation, if the user presses a setting key on the remote controller 190 once when the first program is being provided on channel 11-1, the first program may be listed on the favorite program table. The fourth program, corresponding to channel 6-1, and the fifth program, corresponding to channel 7-1, may be listed in the favorite program table in the same manner as the first program. Accordingly, it is possible to list a plurality of broadcast programs in the favorite program table using the process described above.

The setting key may be a function key such as a selection key included in the remote controller 190, or may be a new function key. The setting key may be used to send to the broadcast receiving apparatus 100 the list command to list broadcast programs which the user desires to view in the favorite program table and the delete command to delete the listed broadcast programs from the favorite program table.

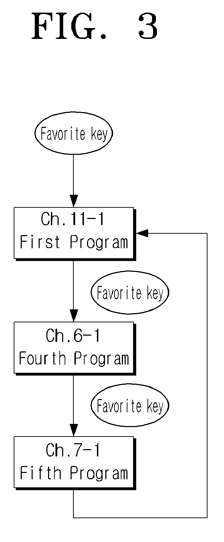

FIG. 3 is a diagram explaining a method for viewing broadcast programs using a favorite program setting function of the broadcast receiving apparatus 100 according to an exemplary embodiment of the present invention.

FIG. 3 shows a situation in which the first program, fourth program, and fifth program are listed in the favorite program table. The first program, fourth program, and fifth program listed in the favorite program table are provided to the user in response to the favorite program selection command received by the command receiver 160.

In more detail, if the user presses a favorite key on the remote controller 190 once, the first program corresponding to channel 11-1, which is listed first in the favorite program table, may be provided to the user. In this situation, if the user presses the favorite key once even when the broadcast receiving apparatus 100 provides the user with a broadcast program which is not listed in the favorite program table, the first program may also be shown on channel 11-1. If the user presses the favorite key a second time, the fourth program corresponding to channel 6-1 may be provided to the user, and if the user presses the favorite key a third time, the fifth program corresponding to channel 7-1 may be provided to the user.

According to this process described above, the user may be provided sequentially with the broadcast programs contained in the favorite program table by manipulating the favorite key on the remote controller 190. The favorite key may desirably be added as a new function key to the remote controller 190.

Additionally, if the user presses the favorite key on the remote controller 190 once, or controls the first program corresponding to the channel 11-1 to be displayed on a screen using the menu, it is possible to provide sequentially the broadcast programs listed in the favorite program table using channel up/down keys. If the channel down key is used, the broadcast programs may be displayed on the screen in the order of the first program, fourth program and fifth program, and if the channel up key is used, the broadcast programs may be displayed on the screen in the order of the first program, fifth program and fourth program.

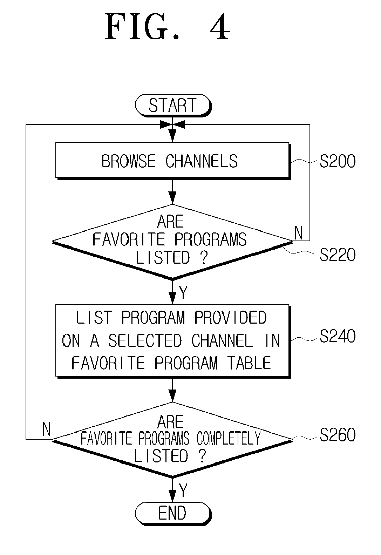

FIG. 4 is a flowchart explaining a method for setting a favorite program in the broadcast receiving apparatus 100 according to an exemplary embodiment of the present invention.

As shown in FIG. 4, the user browses channels using the number keys or channel up/down keys of the remote controller 190 in order to search for desired broadcast programs (operation S200). If the user manipulates the setting key on the remote controller 190 in order to list the favorite programs (operation S220), the broadcast receiving apparatus 100 may list a broadcast program provided on a channel selected by the user in the favorite program table (operation S240). In other words, the broadcast program currently output as sound and video may be listed in the favorite program table.

Operations S200 to S240 may be repeated in the manner described above until the favorite programs are completely listed (operation S260).

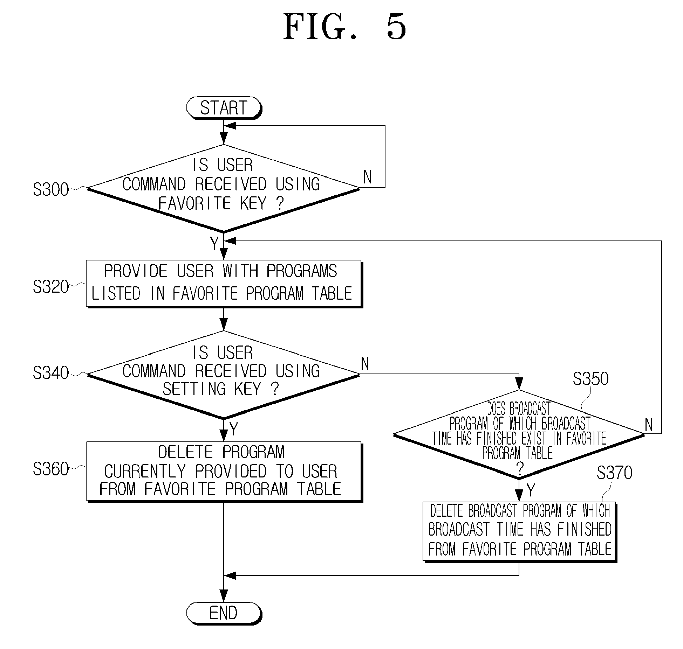

FIG. 5 is a flowchart explaining a method for deleting a favorite program in the broadcast receiving apparatus 100 according to an exemplary embodiment of the present invention.

In FIG. 5, if a user command to select a favorite program is received using the favorite key on the remote controller 190 (operation S300), the broadcast receiving apparatus 100 may provide the user with the programs listed in the favorite program table (operation S320). As described above in FIG. 3, the broadcast programs stored in the favorite program table may be provided to the user according to user input using the favorite key.

If a user command to delete a broadcast program from the favorite program table is received using the favorite key on the remote controller 190 (operation S340), the program currently provided to the user may be deleted from the favorite program table (operation S360). In more detail, if the user inputs the delete command using the setting key when the program in the favorite program table is currently provided to the user, the program currently provided to the user may be deleted from the favorite program table.

If a broadcast program of which a broadcast time has finished exists in the favorite program table, even when the user command is not received (operation S350), the broadcast program may also be deleted from the favorite program table (operation S370). Accordingly, it is also possible to remove the broadcast program of which the broadcast time has finished from the favorite program table, based on the information regarding the broadcast time contained in the digital broadcast signal.

The digital broadcast signal comprising information regarding the broadcast time has been described in the present invention, but the present invention is also applicable to an analog broadcast signal having no information regarding the broadcast time. In the case of analog broadcasting, broadcast programs may be deleted using only operations S340 to 360.

As described above, according to the exemplary embodiment of the present invention, it is possible to list broadcast programs currently being displayed on a screen in a favorite program table or to delete the broadcast programs from the favorite program table in real time, so that a user may easily set desired broadcast programs freely according to the time and circumstances.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus (100) comprising:
a command receiver (160) which receives a channel selection command;
a broadcast signal receiver (110) which receives a broadcast signal of a channel selected in response to the channel selection command; and
a controller (180) which lists a broadcast program corresponding to the broadcast signal received by the broadcast signal receiver in a favorite program table, if a list command is received by the command receiver while the broadcast program is provided.

2. The broadcast receiving apparatus (100) as claimed in claim 1, wherein the controller (180) deletes the broadcast program listed in the favorite program table from the favorite program table if a delete command is received by the command receiver (160) while the broadcast program is provided.

3. The broadcast receiving apparatus (100) as claimed in claim 2, wherein the list command and the delete command are input to the command receiver (160) via the same key.

4. The broadcast receiving apparatus (100) as claimed in any preceding claim, wherein the controller (180) deletes the broadcast program of which a broadcast time has finished from the favorite program table, if the broadcast program of which the broadcast time has finished exists in the favorite program table.

5. The broadcast receiving apparatus (100) as claimed in any preceding claim, further comprising:
a user interface generator (170) which generates one of a message and an icon to notify that the broadcast program has been listed in the favorite program table.

6. The broadcast receiving apparatus (100) as claimed in any preceding claim, wherein, in response to a favorite program selection command received by the command receiver (160), the controller (180) controls the broadcast programs listed in the favorite program table to be provided sequentially.

7. The broadcast receiving apparatus (100) as claimed in any preceding claim,
wherein, in response to the favorite program selection command received by the command receiver (160), the controller (180) controls one broadcast program from among the broadcast programs listed in the favorite program table to be provided, and
wherein the controller provides the broadcast programs listed in the favorite program table sequentially using one of a channel up key and a channel down key on the command receiver.

8. The broadcast receiving apparatus (100) as claimed in any preceding claim, further comprising:
a memory unit (150) which stores the favorite program table,
wherein the controller (180) updates a broadcast time of the broadcast program listed in the favorite program table, based on data contained in the broadcast signal periodically received by the broadcast signal receiver (160).

9. The broadcast receiving apparatus (100) as claimed in claim 8, wherein the controller (180) deletes a corresponding broadcast program from the favorite program table, according to the updated broadcast time.

10. A method for setting a favorite program in a broadcast receiving apparatus, the method comprising:
receiving a channel selection command;
receiving a broadcast signal of a channel selected in response to the channel selection command; and
listing a broadcast program corresponding to the received broadcast signal in a favorite program table, if a list command is received while the broadcast program is provided.

11. The method as claimed in claim 10, further comprising:
deleting the broadcast program listed in the favorite program table from the favorite program table if a delete command is received while the broadcast program is provided.

12. The method as claimed in claim 11, wherein the list command and the delete command are input via the same key.

13. The method as claimed in any one of claims 10-12, further comprising:
deleting the broadcast program of which a broadcast time has finished from the favorite program table, if the broadcast program of which the broadcast time has finished exists in the favorite program table.

14. The method as claimed in any one of claims 10-13, further comprising:
generating one of a message and an icon to notify that the broadcast program has been listed in the favorite program table.

15. The method as claimed in any one of claims 10-14, further comprising:
in response to a received favorite program selection command, controlling the broadcast programs listed in the favorite program table to be provided sequentially.

16. The method as claimed in any one of claims 10-15, further comprising:
in response to the received favorite program selection command, controlling one broadcast program from among the broadcast programs listed in the favorite program table to be provided; and
sequentially providing the broadcast programs listed in the favorite program table using one of a channel up key and a channel down key.

17. The method as claimed in any one of claims 10-16, further comprising:
storing the favorite program table; and
updating the broadcast time of the broadcast program listed in the favorite program table, based on data contained in the periodically received broadcast signal.

18. The method as claimed in claim 17, further comprising:
deleting a corresponding broadcast program from the favorite program table, according to the updated broadcast time.
